# EUROPÄISCHE PATENTSCHRIFT

(11) **EP 2 944 602 B1**
(45) Veröffentlichungstag und Bekanntmachung des Hinweises auf die Patenterteilung: **01.03.2017**
(21) Anmeldenummer: 15166732.6
(22) Anmeldetag: 07.05.2015
(51) Int. Cl.: B66F 9/075, B62D 51/02, B60N 2/38

(54) **FLURFÖRDERZEUG MIT EINER VERSCHWENKBAREN ANLEHNHILFE**
INDUSTRIAL TRUCK WITH A PIVOTABLE BACKREST
CHARIOT DE MANUTENTION AVEC UNE SELLETTE PIVOTABLE

(30) Priorität: 16.05.2014 DE 102014007128; 03.06.2014 DE 102014107766
(43) Veröffentlichungstag der Anmeldung: 18.11.2015
(73) Patentinhaber: KION Warehouse Systems GmbH, 72760 Reutlingen (DE)
(72) Erfinder: Schäfer, Dirk, 72766 Reutlingen (DE)
(74) Vertreter: Patentship Patentanwaltsgesellschaft mbH

(56) Entgegenhaltungen:
- DE-A1-102006 047 403
- JP-A- 2001 270 694
- JP-A- 2007 290 521

## Beschreibung

Die Erfindung betrifft ein Flurförderzeug, das als Standgerät zur Bedienung durch eine stehende Bedienperson ausgebildet ist und einen Fahrerarbeitsplatz aufweist, der eine Fahrerstandplattform für die stehende Bedienperson aufweist und der mit mindestens einer Bedieneinrichtung, insbesondere einem Bedienpult, versehen ist, wobei der Fahrerarbeitsplatz mit einer Anlehnhilfe für die stehende Bedienperson versehen ist, wobei die Anlehnhilfe an einem Schwenkträger angeordnet ist, der um eine im Wesentlichen parallel zur Fahrerstandplattform angeordnete Schwenkachse verschwenkbar an dem Fahrerarbeitsplatz angeordnet ist, wobei der Schwenkträger derart an dem Fahrerarbeitsplatz angeordnet ist, dass sich durch Verschwenken des Schwenkträgers um die Schwenkachse die Höhe der Anlehnhilfe zu der Fahrerstandplattform und gleichzeitig der Abstand der Anlehnhilfe zu der Bedieneinrichtung verändert, wobei der Schwenkträger zwischen einer eingeklappten Endstellung und einer ausgeklappten Endstellung verschwenkbar und arretierbar ist und eine Arretiereinrichtung zum Arretieren des Schwenkträgers in den Endstellungen und den Zwischenstellungen zwischen den Endstellungen vorgesehen ist, wobei die Arretiereinrichtung als formschlüssige Einrasteinrichtung ausgebildet ist, die zumindest ein Rastelement aufweist, das mit zumindest einer Rastausnehmung zusammenwirkt.

Ein gattungsgemäßes Flurförderzeug ist aus der JP 2007 290521 A bekannt.

Als Standgeräte ausgebildete Flurförderzeuge werden von einer im Betrieb des Flurförderzeugs auf einer Fahrerstandplattform eines Fahrerarbeitsplatzes stehenden Bedienperson bedient.

Derartige als Standgeräte ausgebildete Flurförderzeuge weisen in der Regel eine als Bedienpult ausgebildete Bedieneinrichtung auf, an der alle Bedienelemente zur Bedienung des Flurförderzeugs vereint sind und mit der alle Funktionen des Flurförderzeugs gesteuert werden können. An der Bedieneinrichtung sind hierzu Bedienelemente zur Steuerung des Fahrantriebs und der Lasthandhabungsfunktionen des Flurförderzeugs sowie ein Lenkgeber angeordnet. In der Regel ist die Bedieneinrichtung weiterhin mit einem Display versehen. Während der Bedienung des Flurförderzeugs befindet sich die stehende Bedienperson frontal hinter der Bedieneinrichtung, so dass die Bedienperson mit beiden Händen auf die Bedieneinrichtung zugreifen kann.

Um der vor der Bedieneinrichtung stehenden Bedienperson einen verbesserten Komfort zu bieten, ist es bereits bekannt, den Fahrerarbeitsplatz mit einer Anlehnhilfe zu versehen, an der sich die stehende Bedienperson im Betrieb des Flurförderzeugs mit dem Rücken bzw. dem Gesäß anlehnen kann. Die Anlehnhilfe ermöglicht somit eine Stehentlastung der stehenden Bedienperson. Derartige Anlehnhilfen sind auf der Basis eines Stehsitzes bzw. Hilfssitzes oder einer Rückenlehne ausgelegt. Um eine Anpassung an unterschiedliche Körpergrößen zu ermöglichen, ist es bereits bekannt, eine derartige auf Basis eines Stehsitzes bzw. Hilfssitzes oder einer Rückenlehne ausgelegte Anlehnhilfe höhenverstellbar an dem Fahrerarbeitsplatz anzuordnen. Es hat sich gezeigt, dass eine derartige höhenverstellbare Anordnung der Anlehnhilfe als Nachteil aufweist, dass sich durch eine Höhenverstellung der Anlehnhilfe, um die Anlehnhilfe an die Körpergröße der Bedienperson anzupassen, die Erreichbarkeit der Bedienelemente an der Bedieneinrichtung für bestimmte Körpergrößen der sich an der Anlehnhilfe anlehnenden Bedienperson verschlechtern kann.

Der vorliegenden Erfindung liegt die Aufgabe zugrunde, ein als Standgerät ausgebildetes Flurförderzeug mit einer Anlehnhilfe zur Verfügung zu stellen, das für unterschiedliche Körpergrößen von Bedienpersonen eine Stehentlastung bietet und für unterschiedliche Körpergrößen von Bedienpersonen eine ergonomische Bedienung der Bedieneinrichtung ermöglicht.

Diese Aufgabe wird erfindungsgemäß dadurch gelöst, dass die Einrasteinrichtung zwischen einer Verriegelungsstellung und einer Lösestellung betätigbar ist, wobei die Einrasteinrichtung mittels einer Federeinrichtung in die Verriegelungsstellung betätigt ist und durch eine von der Bedienperson an dem Schwenkträger aufgebrachte Betätigungskraft, die der Federkraft der Federeinrichtung entgegengewirkt, in die Lösestellung betätigbar ist. Durch die verschwenkbare und somit klappbare Anordnung der Anlehnhilfe an einem Schwenkträger wird erfindungsgemäß erzielt, dass sich beim Verschwenken der Anlehnhilfe um die Schwenkachse bei einer Anlehnhilfe, die an dem Fahrerarbeitsplatz des Flurförderzeugs in Fahrzeuglängsrichtung bzw. in Fahrzeugquerrichtung gegenüberliegend zu der Bedieneinrichtung angeordnet ist und sich die stehende Bedienperson, die die Bedieneinrichtung bedient, in Fahrzeuglängsrichtung bzw. in Fahrzeugquerrichtung gesehen zwischen der Anlehnhilfe und der Bedieneinrichtung befindet, gleichzeitig der vertikale Abstand der Anlehnhilfe zur Fahrerstandplattform und der Abstand der Anlehnhilfe in Fahrzeuglängsrichtung bzw. in Fahrzeugquerrichtung zu der Bedieneinrichtung verändert. Durch das gleichzeitige Verändern des vertikalen Abstands der Anlehnhilfe zur Fahrerstandplattform und des Abstands der Anlehnhilfe in Fahrzeuglängsrichtung bzw. in Fahrzeugquerrichtung zu der Bedieneinrichtung kann mit der erfindungsgemäßen Anlehnhilfe eine ergonomische Stehentlastung gebildet werden, die an unterschiedliche Körpergrößen anpassbar ist und für alle Körpergrößen einer sich an der Anlehnhilfe anlehnenden Bedienperson eine ergonomisch günstige Erreichbarkeit und Bedienbarkeit der Bedieneinrichtung ermöglicht. Der Schwenkträger ist zwischen einer eingeklappten Endstellung und einer ausgeklappten Endstellung verschwenkbar und arretierbar. Die eingeklappte Endstellung bildet somit eine hochgeschwenkte Endstellung mit einer Einstellung der Anlehnhilfe für eine große Bedienperson und die ausgeklappte Endstellung eine heruntergeschwenkte Endstellung mit einer Einstellung der Anlehnhilfe für eine kleine Bedienperson. Durch die Arretierbarkeit des Schwenkträgers an den Endstellungen sowie zwischen den beiden Endstellungen kann somit für eine innerhalb des von den Endstellungen definierten Körpergrößenbereichs einer Bedienperson liegende Körpergröße einer Bedienperson jeweils eine ergonomische Stehentlastung mit einer ergonomisch günstigen Erreichbarkeit und Bedienbarkeit der Bedienelemente erzielt werden. Bei der erfindungsgemäßen Anlehnhilfe ist eine Arretiereinrichtung zum Arretieren des Schwenkträgers in den Endstellungen und den Zwischenstellungen zwischen den Endstellungen vorgesehen. Mit einer derartigen Arretiereinrichtung kann die erfindungsgemäße Anlehnhilfe auf einfache Weise in der gewünschten Einstellung festgestellt werden, um der stehenden und sich an der Anlehnhilfe anlehnenden Bedienperson einen sicheren Halt auf der Fahrerstandplattform bei der Bedienung des Flurförderzeugs zu ermöglichen. Die Arretiereinrichtung ist als formschlüssige Einrasteinrichtung ausgebildet, die zumindest ein Rastelement aufweist, das mit zumindest einer Rastausnehmung zusammenwirkt. Mit einer formschlüssigen Einrasteinrichtung kann eine stabile Arretiereinrichtung der Anlehnhilfe und eine hohe Stabilität der Anlehnhilfe erzielt werden, die der auf der Fahrerstandplattform stehenden und sich an der Anlehnhilfe anlehnenden Bedienperson einen sicheren Halt bietet. Die Einrasteinrichtung ist zwischen einer Verriegelungsstellung und einer Lösestellung betätigbar, wobei die Einrasteinrichtung mittels einer Federeinrichtung in die Verriegelungsstellung betätigt ist und durch eine von der Bedienperson durch Ziehen an dem Schwenkträger oder durch Drücken auf den Schwenkträger aufgebrachte Betätigungskraft, die der Federkraft der Federeinrichtung entgegengewirkt, in die Lösestellung betätigbar ist. Die Betätigungskraft kann hierbei von der Bedienperson durch Ziehen an dem Schwenkträger bzw. durch Drücken auf den Schwenkträger aufgebracht werden. Hierdurch kann die Einrasteinrichtung auf einfache Weise von der Bedienperson in die Lösestellung betätigt werden. Hierdurch wird eine hohe Betriebssicherheit erzielt, da die Einrasteinrichtung von der Federeinrichtung in die Verriegelungsstellung beaufschlagt ist. Zudem wird hierdurch eine einfache Bedienbarkeit der Einrasteinrichtung erzielt, die eine einfache Anpassung des Schwenkträgers und somit der Anlehnhilfe an die Körpergröße der Bedienpersonen ermöglicht, da die Bedienperson durch einfaches Ziehen bzw. Drücken an dem Schwenkträger die Einrasteinrichtung in die Lösestellung betätigen kann, um die Anlehnhilfe an die Körpergröße anzupassen, und nach erfolgter Einstellung der Anlehnhilfe durch einfaches Loslassen des Schwenkträgers die Einrasteinrichtung von der Federeinrichtung in die Verriegelungsstellung beaufschlagt wird.

Gemäß einer Ausgestaltungsform der Erfindung ist der Schwenkträger derart an dem Fahrerarbeitsplatz angeordnet, dass sich durch Verschwenken des Schwenkträgers um die Schwenkachse nach unten die Höhe der Anlehnhilfe zu der Fahrerstandplattform verringert und gleichzeitig der Abstand der Anlehnhilfe zu der Bedieneinrichtung verringert und dass sich durch Verschwenken des Schwenkträgers um die Schwenkachse nach oben die Höhe der Anlehnhilfe zu der Fahrerstandplattform vergrößert und gleichzeitig der Abstand der Anlehnhilfe zu der Bedieneinrichtung vergrößert. Hierdurch wird auf einfache Weise eine erfindungsgemäße Anlehnhilfe erzielt, die an unterschiedliche Körpergrößen anpassbar ist und eine ergonomische Stehentlastung ermöglicht sowie für alle Körpergrößen innerhalb des Einstellbereichs der Anlehnhilfe eine ergonomische Erreichbarkeit und Bedienbarkeit der Bedieneinrichtung ergibt. Für eine kleine Bedienperson kann durch Verschwenken des Schwenkträgers um die Schwenkachse nach unten die Höhe der Anlehnhilfe zu der Fahrerstandplattform verringert und gleichzeitig der Abstand der Anlehnhilfe zu der Bedieneinrichtung verringert werden, so dass sich für eine kleine Bedienperson eine ergonomische Stehentlastung mit einem niedrigen Abstand der Anlehnhilfe zur Fahrerstandplattform und eine ergonomische Erreichbarkeit und Bedienbarkeit der Bedieneinrichtung mit einem kleinen Abstand in Fahrzeuglängsrichtung bzw. in Fahrzeugquerrichtung zwischen der Anlehnhilfe und der Bedieneinrichtung ergibt. Für eine große Bedienperson kann durch Verschwenken des Schwenkträgers um die Schwenkachse nach oben die Höhe der Anlehnhilfe zu der Fahrerstandplattform vergrößert und gleichzeitig der Abstand der Anlehnhilfe zu der Bedieneinrichtung vergrößert werden, so dass sich für eine große Bedienperson eine ergonomische Stehentlastung mit einem hohen Abstand der Anlehnhilfe zur Fahrerstandplattform und eine ergonomische Erreichbarkeit und Bedienbarkeit der Bedieneinrichtung mit einem großen Abstand in Fahrzeuglängsrichtung bzw. in Fahrzeugquerrichtung zwischen der Anlehnhilfe und der Bedieneinrichtung ergibt.

Gemäß einer Ausgestaltungsform der Erfindung ist der Schwenkträger stufenweise zwischen der eingeklappten Endstellung und der ausgeklappten Endstellung arretierbar.

Gemäß einer vorteilhaften Ausgestaltungsform der Erfindung ist der Schwenkträger als U-förmiger Bügel ausgebildet, der seitliche Träger und einen die seitlichen Träger verbindenden Mittelabschnitt aufweist, wobei die seitlichen Träger um die Schwenkachse schwenkbar an dem Fahrerarbeitsplatz angeordnet sind und an dem Mittelabschnitt ein Anlehnpolster als Anlehnhilfe angeordnet ist. Ein derartiger U-förmiger Bügel, der mit einem Anlehnpolster versehen ist, ermöglicht es mit geringem Bauaufwand eine verschwenkbar bzw. klappbar angeordnete Anlehnhilfe zu schaffen. Der aus den beiden seitlichen Trägern und dem die seitlichen Träger verbindenden Mittelabschnitt gebildete U-förmiger Bügel kann hierbei einteilig oder mehrteilig ausgebildet sein. Bei einer mehrteiligen Ausführung des U-förmiger Bügels, bei der die beiden seitlichen Träger und der Mittelabschnitt von getrennten Bauteilen gebildet sind, die miteinander verbunden werden, ergeben sich besondere Vorteile, da durch unterschiedlich breite Mittelabschnitte und somit unterschiedlichen Abstand der beiden seitlichen Träger die erfindungsgemäße Anlehnhilfe auf einfache Weise an unterschiedliche Flurförderzeuge angepasst werden kann.

Mit besonderem Vorteil ist das Anlehnpolster als zylindrisches Polsterelement ausgebildet, das konzentrisch an dem Mittelabschnitt angeordnet ist. Mit einem zylindrischen Polsterelement und somit einem als Rundpolster ausgebildeten Anlehnpolster ergeben sich besondere Vorteile, da in allen Einstellungen der erfindungsgemäßen Anlehnhilfe und somit für alle Körpergrößen innerhalb des Körpergrößenbereichs eine gleiche Geometrie der von der Außenwand des Rundpolsters gebildeten Anlehnfläche des Anlehnpolster erzielt wird und sich somit in allen Einstellungen der erfindungsgemäßen Anlehnhilfe ein vergleichbarer Anlehnkomfort für Bedienpersonen mit unterschiedlichen Körpergrößen ergibt.

Hinsichtlich eines einfachen Aufbaus ergeben sich Vorteile, wenn die Schwenkachse für den Träger gemäß einer vorteilhaften Ausgestaltungsform der Erfindung von einem an einer Lagerplatte angeordneten Lagerzapfen gebildet ist.

Gemäß einer vorteilhaften Weiterbildung der Erfindung ist der Schwenkträger mit einer langlochartigen Ausnehmung zur Aufnahme des Lagerzapfens versehen, so dass der Schwenkträger mittels der langlochartigen Ausnehmung relativ zu dem Lagerzapfen verschiebbar ist. Durch die Verschiebbarkeit des Schwenkträgers relativ zu dem Lagerzapfen mittels der langlochartigen Ausnehmung im Schwenkträger wird auf einfache Möglichkeit eine Freiheitsgrad erzielt, um die Einrasteinrichtung zwischen einer Verriegelungsstellung und einer Lösestellung zu betätigen und durch Ziehen bzw. Drücken an dem Schwenkträger die Einrasteinrichtung in die Lösestellung zu betätigen.

Vorteilhafterweise ist die Federeinrichtung zwischen dem Schwenkträger und dem Lagerzapfen angeordnet. Die Federeinrichtung stützt sich somit an dem Schwenkträger und dem in der langlochartigen Ausnehmung angeordneten Lagerzapfen ab, wodurch in Verbindung mit der Anordnung des Lagerzapfens in der langlochartigen Ausnehmung im Schwenkträger auf einfache Weise eine Beaufschlagung der Einrasteinrichtung in die Verriegelungsstellung durch die Federeinrichtung erzielt werden kann.

Hinsichtlich eines einfachen Aufbaus und eines sicheren Betriebs der formschlüssigen Einrasteinrichtung ergeben sich besondere Vorteile, wenn gemäß einer bevorzugten Ausführungsform der Erfindung das Rastelement als Rastbolzen ausgebildet ist, wobei der Rastbolzen mit der Längsachse auf die Schwenkachse ausgerichtet ist. Hierdurch wird auf einfache Weise erzielt, dass die Längsachse des Rastbolzens parallel zur Längsachse der langlochartigen Ausnehmung angeordnet ist, so dass durch Verschieben des Schwenkträgers in Längsrichtung der langlochartigen Ausnehmung, in der der Lagerzapfen angeordnet ist, die den Rastbolzen umfassende Einrasteinrichtung zwischen der Verriegelungsstellung und der Lösestellung betätigt werden kann.

Eine gestufte Einstellbarkeit und somit eine stufenweise Einstellung des Schwenkträgers lässt sich bei der Ausführung der Einrasteinrichtung mit einem Rastbolzen auf einfache Weise und mit geringem Bauaufwand realisieren, wenn die Rastausnehmungen jeweils von einer Aufnahmebohrung zur Aufnahme des Rastbolzens ausgebildet sind, wobei die Aufnahmebohrungen mit der Längsachse jeweils auf die Schwenkachse ausgerichtet sind.

Gemäß einer vorteilhaften Ausgestaltungsform der Erfindung ist das Rastelement an dem Schwenkträger, insbesondere an dem seitlichen Träger, und die Rastausnehmung an dem Flurförderzeug, insbesondere an der Lagerplatte, angeordnet. Hierbei kann ein einzelnes Rastelement vorgesehen sein, das mit mehreren Rastausnehmungen zusammenwirkt. Alternativ können mehrere Rastelemente vorgesehen sein, die in eine einzige Rastausnehmung eingreifen.

Gemäß einer alternativen Ausgestaltungsform der Erfindung ist das Rastelement an dem Flurförderzeug, insbesondere an der Lagerplatte, und die Rastausnehmung an dem Schwenkträger, insbesondere an dem seitlichen Träger, angeordnet. Hierbei kann ein einzelnes Rastelement vorgesehen sein, der mit mehreren Rastausnehmungen zusammenwirkt. Alternativ können mehrere Rastelemente vorgesehen sein, die in eine einzige Rastausnehmung eingreifen.

Gemäß einer vorteilhaften Ausführungsform der Erfindung ist die langlochartige Ausnehmung in dem seitlichen Träger ausgebildet und ist der seitliche Träger mit einem Aufnahmeraum versehen, in dem die Federeinrichtung angeordnet ist. Die beiden seitlichen Träger bilden somit die Führung des bügelförmigen Schwenkträgers, mittels denen der Schwenkträger an den Lagerzapfen verschwenkbar und bezüglich der Lagerzapfen innerhalb der Abmessungen der langlochartigen Ausnehmung verschiebbar angeordnet ist.

Der Aufnahmeraum der Federeinrichtung ist vorteilhafterweise von einer Aufnahmebohrung in dem seitlichen Träger gebildet, wobei sich die Aufnahmebohrung zu der langlochartigen Ausnehmung erstreckt und fluchtend zu der langlochartigen Ausnehmung angeordnet ist. Hierdurch wird auf einfache Weise erzielt, dass sich die Federeinrichtung an dem in der langlochartigen Ausnehmung angeordneten Lagerzapfen abstützen kann.

Zweckmäßigerweise ist an der Lagerplatte ein mit dem seitlichen Träger zusammenwirkender Anschlag für die eingeklappte Endstellung des Schwenkträgers und ein mit dem seitlichen Träger zusammenwirkender Anschlag für die ausgeklappte Endstellung des Schwenkträgers angeordnet ist. Mit derartigen Anschlägen kann auf einfache Weise die Verschwenkbarkeit des Schwenkträgers um die Schwenkachse zwischen den Endstellungen begrenzt werden.

Mit besonderem Vorteil ist an dem seitlichen Träger ein mit der Lagerplatte zusammenwirkender Anschlag für die Verriegelungsstellung der Einrasteinrichtung angeordnet. Mit einem derartigen Anschlag, der an dem seitlichen Träger angeordnet ist und mit dem sich der seitliche Träger an der Lagerplatte abstützt, wird zudem auf einfache Weise eine stabile Abstützung der auf die Anlehnhilfe einwirkenden Kräfte erzielt, wenn sich die Bedienperson an die Anlehnhilfe anlehnt und abstützt.

Weitere Vorteile und Einzelheiten der Erfindung werden anhand des in den schematischen Figuren dargestellten Ausführungsbeispiels näher erläutert. Hierbei zeigt
- Figur 1: ein Flurförderzeug in einer Seitenansicht,
- Figur 2: einen Fahrerarbeitsplatz eines Flurförderzeugs mit einer erfindungsgemäßen Anlehnhilfe in einer perspektivischen Darstellung,
- Figur 3: einen Ausschnitt der Figur 2,
- Figur 4: einen Ausschnitt X der Figur 3 in einer vergrößerten Darstellung,
- Figur 5: eine Seitenansicht der Figur 3,
- Figur 6: einen Ausschnitt Y der Figur 5 in einer vergrößerten Darstellung und
- Figuren 7 bis 10: die erfindungsgemäße Anlehnhilfe der Figuren 2 bis 6 in verschiedenen Stellungen.

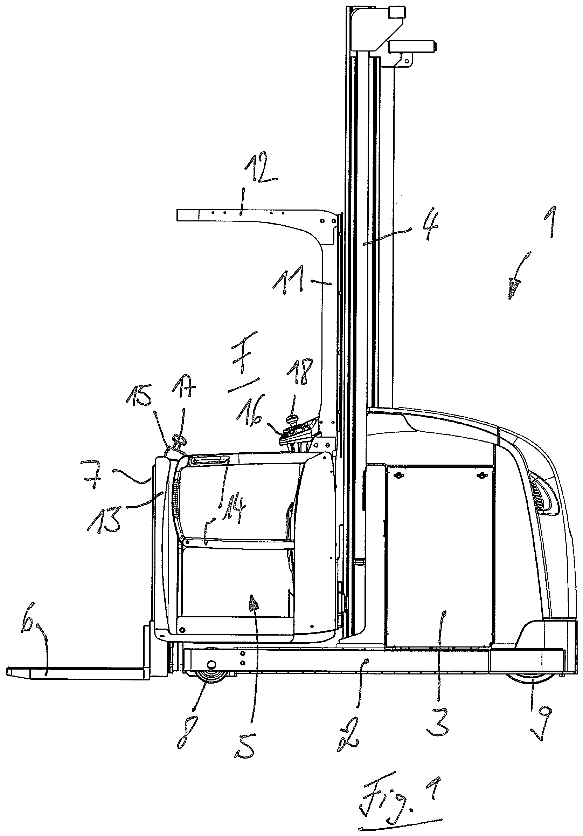

In der Figur 1 ist ein als Standgerät ausgebildetes Flurförderzeug 1 in einer Seitenansicht dargestellt.

Das Flurförderzeug 1 weist einen Fahrzeugkörper mit einem Rahmen 2 auf, in dem ein Batteriefach zur Aufnahme einer beispielsweise als Antriebsbatterie ausgebildeten Energieversorgungseinheit 3 eines batterie-elektrischen Antriebssystems des Flurförderzeugs ausgebildet ist. Das Flurförderzeug 1 weist einen Fahrerarbeitsplatz F für eine Bedienperson auf. Im dargestellten Ausführungsbeispiel ist der Fahrerarbeitsplatz F von einem als Fahrkorb bzw. Fahrerkabine ausgebildeten Fahrerstand 5 gebildet, der an einem von einem Hubgerüst gebildeten Hubwerk 4 mittels eines nicht näher dargestellten Hubantriebs auf- und abbewegbar angeordnet ist.

An dem Fahrerstand 5 ist bei dem dargestellten Flurförderzeug 1 ein Lastaufnahmemittel 6 befestigt. Im dargestellten Ausführungsbeispiel ist die Lastaufnahmeeinrichtung 6 als Lastgabel mit zwei Gabelzinken ausgebildet. Das Lastaufnahmemittel 6 kann starr an dem Fahrerstand 5 angeordnet sein oder alternativ an einen am Fahrerstand 5 angeordneten Hubmast 7 anhebbar und absenkbar angeordnet wein kann.

In dem Fahrerarbeitsplatz F sind die für die Bedienung des Flurförderzeugs 1 erforderlichen Steuer- und Bedienelemente angeordnet.

Das Flurförderzeug 1 stützt sich mittels Laufrädern 8, die an einem lastteilseitigen Ende des Rahmens 2 angeordnet ist, und einem lenkbaren Antriebsrad 9, das an einem antriebsteilseitigen Ende des Rahmens 2 angeordnet ist, auf einer Fahrbahn ab. Im antriebsteilseitigen Ende des Rahmens 2 ist weiterhin ein nicht näher dargestelltes elektrisches Antriebssystem angeordnet, das einen elektrischen Fahrmotor und einen Lenkantrieb, beispielsweise einen elektrischen Lenkmotor, für das lenkbare Antriebsrad 9 sowie ein elektrisch betriebenes Hydraulikpumpenaggregat umfasst, das zur Versorgung der Arbeitshydraulik vorgesehen ist, die von dem Hubantrieb des Hubwerkes 4 sowie einem Hubantrieb des Hubmastes 7 sowie gegebenenfalls vorhandenen Antrieben für das Lastaufnahmemittel 6 gebildet sind.

In der Figur 1 ist das Flurförderzeug als Kommissionierflurförderzeug, beispielsweise Vertikalkommissionierer ausgebildet. Die Erfindung ist nicht auf die dargestellte Ausführung des Flurförderzeugs 1 mit der Ausführung des Fahrerarbeitsplatzes F an einem anhebbaren und absenkbaren Fahrerstand 5 beschränkt. Die Erfindung kann ebenfalls bei einem Flurförderzeug mit einem nicht anhebbaren Fahrerarbeitsplatz F umgesetzt werden.

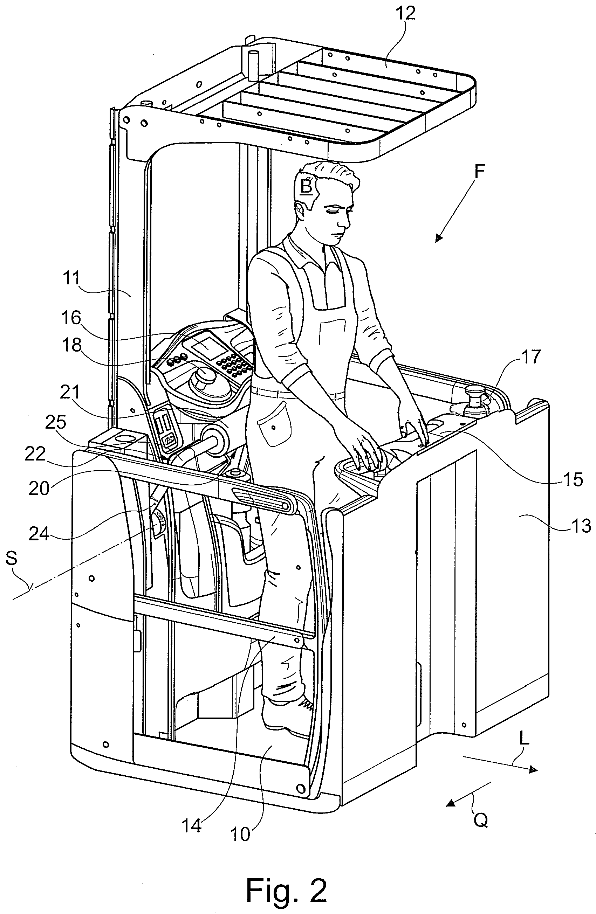

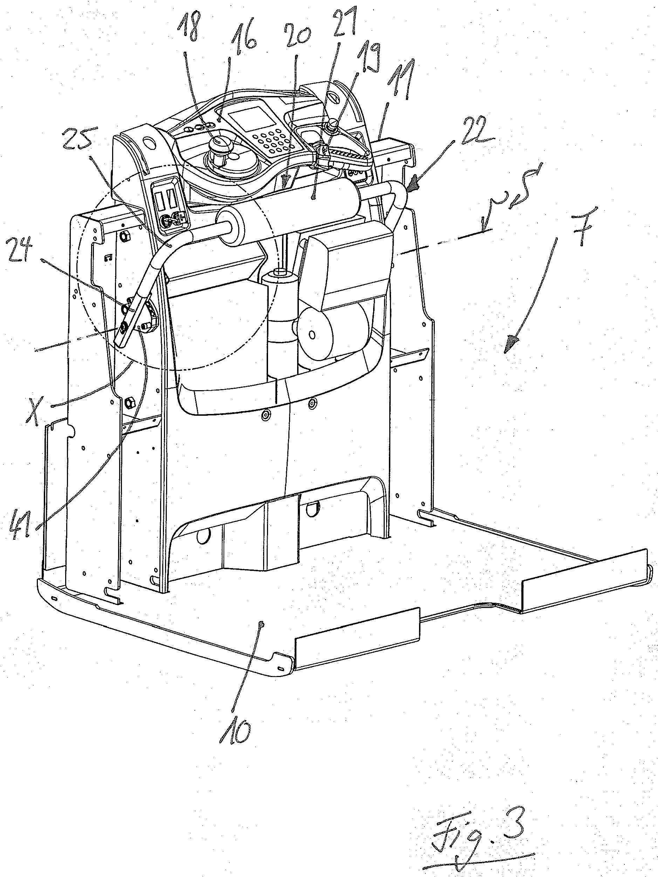

Der Fahrerarbeitsplatz F weist - wie aus den Figuren 2, 3 und 5 näher dargestellt ist - eine Fahrerstandplattform 10 auf, auf der eine in der Figur 2 näher dargestellte Bedienperson B im Betrieb des Flurförderzeugs 1 steht.

Der in dem dargestellten Ausführungsbeispiel als anhebbarer und absenkbarer Fahrerstand 5 ausgebildete Fahrerarbeitsplatz F weist weiterhin eine dem Hubwerk 4 zugewandte Rückwand 11, an der ein Fahrerschutzdach 12 angeordnet ist, und eine dem Lastaufnahmemittel 6 zugewandte Brüstungswand 13 auf. Zur seitlichen Begrenzung des Fahrerstandes 5 sind Seitenbegrenzungen 14 vorgesehen, die beispielsweise von strebenartigen Seitenschranken oder von Türen gebildet werden können.

In dem Fahrerarbeitsplatz F sind die für die Bedienung des Flurförderzeugs 1 erforderlichen Steuer- und Bedienelemente angeordnet. Wie aus den Figuren 1 und 2 ersichtlich ist, ist der Fahrerarbeitsplatz F in dem dargestellten Ausführungsbeispiel mit mehreren Bedieneinrichtungen 15, 16 versehen, die beispielsweise jeweils als Bedienpult ausgebildet sind. Die Bedieneinrichtung 16 ist hierbei als mastseitiges Bedienpult ausgebildet, das an der dem Hubwerk 4 zugewandten Seite des Fahrerarbeitsplatzes F angeordnet ist. Die Bedieneinrichtung 15 ist als lastseitiges Bedienpult ausgebildet, das an der dem Lastaufnahmemittel 6 zugewandten Seite des Fahrerarbeitsplatzes F angeordnet ist.

Die Bedieneinrichtungen 15 und 16 sind jeweils mit einem als Lenkgeber 17 bzw. 18 ausgebildeten Signalgeber als Sollwertgeber für die elektrische Lenkung des Flurförderzeugs 1 versehen. Zudem ist an jeder Bedieneinheit ein als Fahrgeber 19 ausgebildeter Signalgeber als Sollwertgeber für den Fahrantrieb des Flurförderzeugs 1 sowie ein als Geber ausgebildeter Signalgeber als Sollwertgeber für den Hubantrieb des Flurförderzeugs 1 vorgesehen. Zudem können an den Bedieneinrichtungen 15, 16 weitere Bedienelemente als Signalgeber für weitere Fahrzeugfunktionen vorgesehen sein.

In dem dargestellten Ausführungsbeispiel ist - wie in der Figur 2 dargestellt ist - für die vor der Bedieneinrichtung 15 stehende und die Bedieneinrichtung 15 im Stehen bedienende Bedienperson B eine erfindungsgemäße Anlehnhilfe 20 vorgesehen. Die Anlehnhilfe 20 ist im dargestellten Ausführungsbeispiel an dem Fahrerarbeitsplatz F in Fahrzeuglängsrichtung L des Flurförderzeugs 1 gegenüberliegend zu der Bedieneinrichtung 15 angeordnet. Die stehende Bedienperson B, die die Bedieneinrichtung 15 bedient, befindet sich somit in Fahrzeugslängsrichtung L gesehen zwischen der Anlehnhilfe 20 und der Bedieneinrichtung 15 und kann sich mit dem Gesäß an der Anlehnhilfe 20 anlehnen.

Die erfindungsgemäße Anlehnhilfe 20 ist von einem Anlehnpolster 21 gebildet, das an einem Schwenkträger 22 angeordnet ist. Der Schwenkträger 22 ist um eine im Wesentlichen parallel zur Fahrerstandplattform 10 angeordneten Schwenkachse S verschwenkbar an dem Fahrerarbeitsplatz F angeordnet ist. Im dargestellten Ausführungsbeispiel verläuft die Schwenkachse S in Fahrzeugquerrichtung Q.

Der Schwenkträger 22 ist als U-förmiger Bügel ausgebildet, der von zwei seitlichen Trägern 24 und einem die beiden seitlichen Träger 24 verbindenden Mittelabschnitt 25 gebildet ist. Die beiden seitlichen Träger 24 sind jeweils um die Schwenkachse S schwenkbar an dem Fahrerarbeitsplatz F angeordnet sind. An dem Mittelabschnitt 25 ist das Anlehnpolster 21 angeordnet.

Im dargestellten Ausführungsbeispiel ist der U-förmige Bügel mehrteilig ausgeführt, wobei der Mittelabschnitt 25 als Rohr mit einem kreisförmigen Querschnitt ausgebildet ist, der auf zylindrische Abschnitte 24a der Träger 24 aufgesteckt und gegen Lösen gesichert ist.

Das Anlehnpolster 21 ist als zylindrisches Polsterelement und somit als Rundpolster ausgebildet, das konzentrisch an dem Mittelabschnitt 25 angeordnet ist.

In den Figuren 2 bis 10 ist lediglich ein Träger 24 dargestellt, dessen verschwenkbare Anordnung im Fahrerarbeitsplatz F im Folgenden beschrieben wird. Der an der anderen Fahrzeugseite angeordnete und in den Figuren 2 bis 10 nicht dargestellte Träger 24 weist einen identischen Aufbau auf.

Der Schwenkträger 22 ist zwischen einer in den Figuren 2 bis 6 dargestellten eingeklappten, hochgeklappten Endstellung und einer ausgeklappten, heruntergeklappten Endstellung verschwenkbar um die Schwenkachse S verschwenkbar angeordnet und im dargestellten Ausführungsbeispiel an den beiden Endstellungen und in mindestens einer Zwischenstellungen zwischen den beiden Endstellung stufenweise arretierbar.

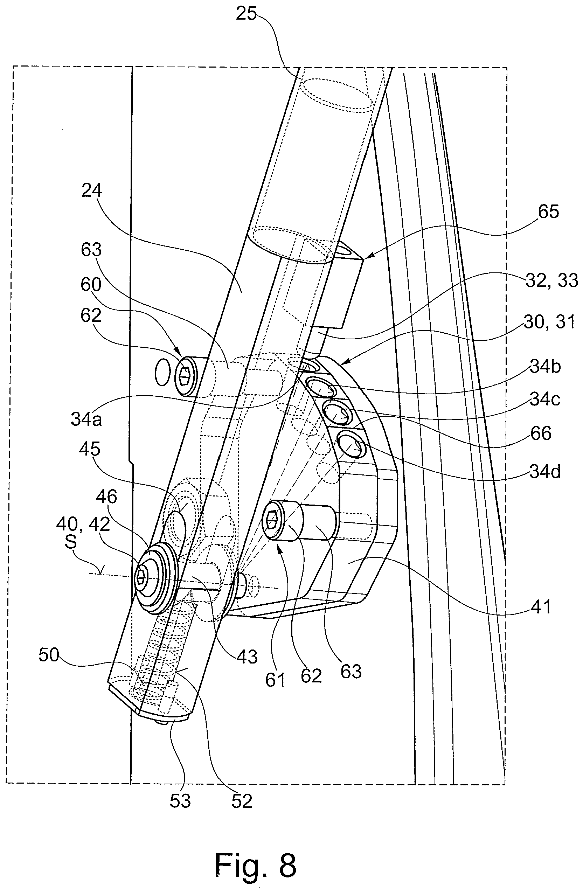

Zum Arretieren des Schwenkträgers 22 in den beiden Endstellungen und den Zwischenstellungen zwischen den Endstellungen ist eine Arretiereinrichtung 30 vorgesehen. Die Arretiereinrichtung 30 ist im dargestellten Ausführungsbeispiel als formschlüssige Einrasteinrichtung 31 ausgebildet. Die Einrasteinrichtung 31 weist im dargestellten Ausführungsbeispiel - wie anhand der Figur 8 näher erläutert wird - ein Rastelement 32 auf, das mit mehreren Rastausnehmungen 34a, 34b, 34c, 34d zusammenwirkt.

Das Rastelement 32 ist im dargestellten Ausführungsbeispiel als Rastbolzen 33 ausgebildet, der an einer Seitenfläche des seitlichen Trägers 24 des Schwenkträgers 22 angeordnet ist. Die Rastausnehmungen 34a, 34b, 34c, 34d sind jeweils von einer Aufnahmebohrung zur Aufnahme des Rastbolzens 33 ausgebildet, die am Fahrerarbeitsplatz F feststehend angeordnet sind. Die Längsachse des Rastbolzens 33 ist auf die Schwenkachse S ausgerichtet und schneidet die Schwenkachse S. Die Längsachsen der Aufnahmebohrungen sind jeweils auf die Schwenkachse S ausgerichtet und schneiden die Schwenkachse S.

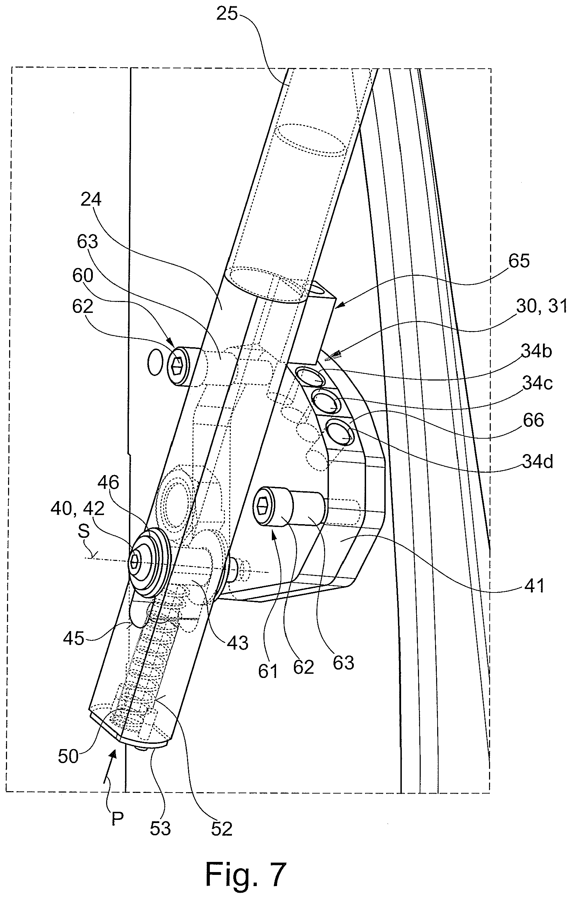

Die Schwenkachse S ist von einem Lagerzapfen 40 gebildet, der an einer Lagerplatte 41 angeordnet ist. Die Lagerplatte 41 ist an dem Fahrerarbeitsplatz F befestigt. Der Lagerzapfen 40 ist im dargestellten Ausführungsbeispiel - wie in den Figuren 7 bis 10 näher dargestellt ist - von einer in die Lagerplatte 41 eingeschraubten Schraube 42 gebildet, auf der eine zylindrische Hülse 43 angeordnet ist.

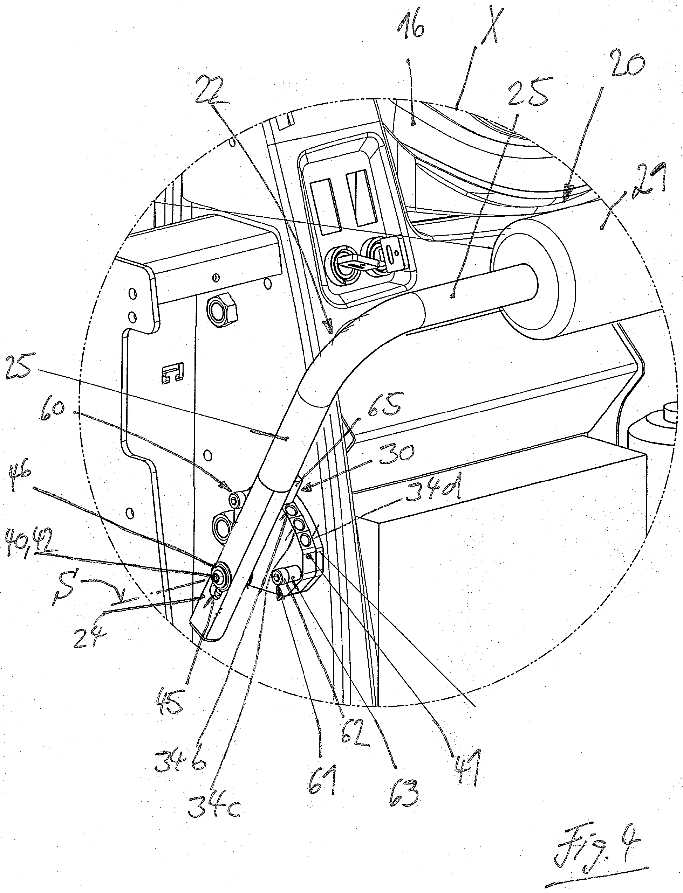

Der Träger 24 des Schwenkträgers 22 ist - wie in der Figur 4 näher dargestellt ist - mit einer langlochartige Ausnehmung 45 versehen, in der der Lagerzapfen 40 angeordnet ist. Die langlochartige Ausnehmung 45 ist mit der Längsachse in Längsrichtung des Trägers 24 angeordnet und durchsetzt den Träger 24 vollständig in dessen Breite. Die Schraube 42 erstreckt sich durch die langlochartigen Ausnehmung 45, wobei über eine an der Außenseite des Trägers 24 angeordnete Scheibe 46 eine Sicherung des Trägers 24 in Längsrichtung der Schwenkachse S erzielt wird. Mittels der langlochartigen Ausnehmung 45, in der der Lagerzapfen 40 angeordnet ist, ist somit der Schwenkträger 22 relativ zu dem Lagerzapfen 40 in Längsrichtung der langlochartigen Ausnehmung 45 verschiebbar.

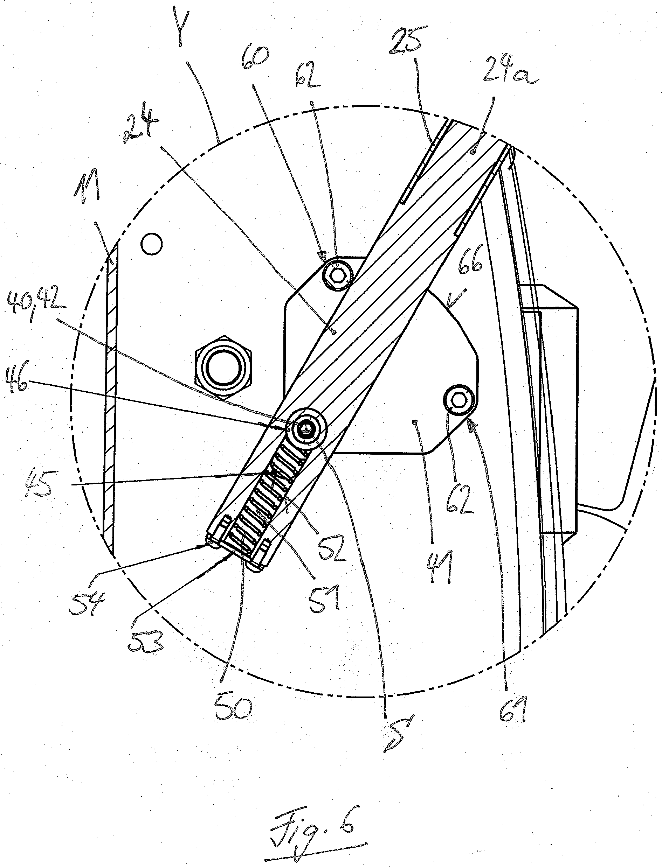

Die Einrasteinrichtung 31 ist zwischen einer Verriegelungsstellung, in der das Rastelement 32 in einer der Rastausnehmungen 34a, 34b, 34c, 34d angeordnet ist, und einer Lösestellung betätigbar, in der das Rastelement 32 außerhalb der Rastausnehmungen 34a, 34b, 34c, 34d angeordnet ist. Wie aus der Figur 6 ersichtlich, ist die Einrasteinrichtung 31 mittels einer Federeinrichtung 50 in die Verriegelungsstellung betätigt. Die Einrasteinrichtung 31 kann in dem dargestellten Ausführungsbeispiel durch Ziehen an dem Schwenkträger 22 in die Lösestellung betätigt werden, wobei von der Bedienperson eine der Federkraft der Federeinrichtung 50 entgegenwirkende und entgegengerichtete Betätigungskraft aufgebracht wird und der Träger 24 entlang der langlochartigen Ausnehmung 45 an dem Lagerzapfen 40 geführt ist.

Die Federeinrichtung 50 ist hierzu zwischen dem Schwenkträger 22 und dem Lagerzapfen 40 angeordnet.

Im dargestellten Ausführungsbeispiel ist der seitliche Träger 24 mit einem Aufnahmeraum 51 versehen, in dem die Federeinrichtung 50 angeordnet ist. Der Aufnahmeraum 51 ist von einer Aufnahmebohrung 52 in dem seitlichen Träger 24 gebildet, die sich von einer unteren Stirnseite des Trägers 24 zu der langlochartigen Ausnehmung 45 erstreckt und zu der langlochartigen Ausnehmung 45 geöffnet ist. Die Längsachse der Aufnahmebohrung 52 ist fluchtend zur Längsachse der langlochartigen Ausnehmung 45 angeordnet. Die an der unteren Stirnseite 24 ausgebildete Öffnung der Aufnahmebohrung ist mittels eines an dem Träger 24 befestigten Deckels 53 verschlossen. Der Deckel 53 ist im dargestellten Ausführungsbeispiel mittels Befestigungsschrauben 54 an dem Träger 24 befestigt.

Die in dem Aufnahmeraum 51 angeordnete Federeinrichtung 50 ist somit mit einem Ende an dem Deckel 53 abgestützt und stützt sich mit dem gegenüberliegenden Ende an dem in der langlochartigen Ausnehmung 45 angeordneten Lagerzapfen 40 ab. Die Federeinrichtung 50 ist im dargestellten Ausführungsbeispiel als Druckfeder ausgebildet.

An der Lagerplatte 41 ist ein mit dem seitlichen Träger 24 zusammenwirkender Anschlag 60 für die eingeklappte Endstellung des Schwenkträgers 22 und ein mit dem seitlichen Träger 24 zusammenwirkender Anschlag 61 für die ausgeklappte Endstellung des Schwenkträgers 22 angeordnet ist. Die Anschläge 60, 61 sind im dargestellten Ausführungsbeispiel jeweils von Befestigungsschrauben 62 und auf den Befestigungsschrauben 62 angeordneten Buchsen 63 gebildet. Die Befestigungsschrauben 62 dienen im dargestellten Ausführungsbeispiel weiterhin zur Befestigung des Schwenkträgers 22 an dem Fahrerarbeitsplatz F. Die Befestigungsschrauben 62 erstrecken sich hierbei durch entsprechende Durchgangsbohrungen der Lagerplatte 41 und sind mit dem Fahrerarbeitsplatz F verschraubt.

An dem seitlichen Träger 24 ist weiterhin ein mit der Lagerplatte 41 zusammenwirkender Anschlag 65 für die Verriegelungsstellung der Einrasteinrichtung 30 angeordnet. Der Anschlag 65 ist - wie anhand der Figur 8 näher beschrieben ist - von einem klotzartigen Bauteil gebildet, das an der Innenseite des Trägers 24 befestigt ist. In der Verriegelungsstellung der Einrasteinrichtung 30 liegt der Anschlag 65 mit der unteren Stirnseite auf einer Umfangsfläche 66 der Lagerplatte 41 auf.

Im dargestellten Ausführungsbeispiel ist der Rastbolzen 33 an dem Anschlag 65 ausgebildet bzw. an dem Anschlag 65 angeordnet. Die jeweils als den Rastbolzen 33 aufnehmenden Aufnahmebohrungen ausgebildeten Rastausnehmungen 34a, 34b, 34c, 34d sind hierbei in der Lagerplatte 41 angeordnet. Die als Aufnahmebohrungen ausgebildeten Rastausnehmungen 34a, 34b, 34c, 34d sind hierbei ausgehend von der Umfangsfläche 66 in die Lagerplatte 41 eingearbeitet.

Die Rastausnehmung 34a definiert hierbei die obere, hochgeschwenkte Endstellung der erfindungsgemäßen Anlehnhilfe 20 und die Rastausnehmung 34d die untere, heruntergeschwenkte Endstellung der erfindungsgemäßen Anlehnhilfe 20. Die Rastausnehmungen 34b und 34c definieren zwischen den Endstellungen angeordnete Zwischenstellungen der erfindungsgemäßen Anlehnhilfe 20.

Der Rastbolzen 33 ist weiterhin mit der Längsachse parallel zur Längsachse der langlochartigen Ausnehmung 45 angeordnet.

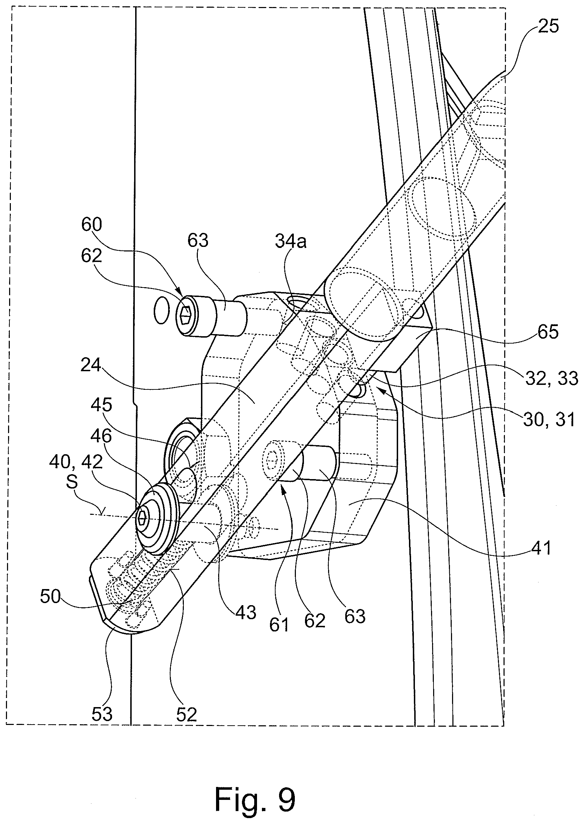

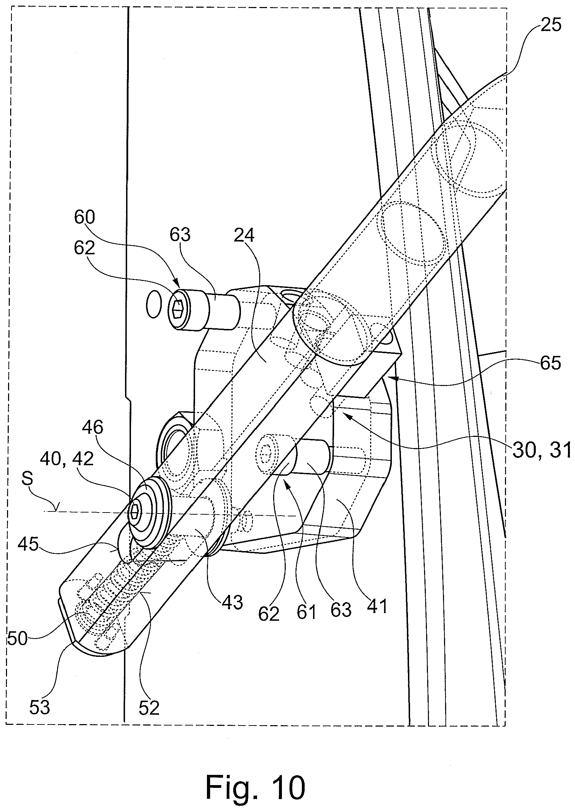

Die Funktion der gestuften und stufenweisen Verstellung der erfindungsgemäßen Anlehnhilfe 20 wird anhand der Figuren 7 bis 10 beschrieben. In den Figuren 7 und 8 befindet sich die Anlehnhilfe 20 in der oberen, hochgeschwenkten Endstellung. In der Figur 7 befindet sich die Einrasteinrichtung 31 in der Verriegelungsstellung, die Figur 8 zeigt die Einrasteinrichtung 31 in der Lösestellung. In den Figuren 9 und 10 befindet sich die Anlehnhilfe 20 in der unteren, heruntergeschwenkten Endstellung. In der Figur 9 befindet sich die Einrasteinrichtung 31 in der Lösestellung, die Figur 10 zeigt die Einrasteinrichtung 31 in der Verriegelungsstellung.

In der Figur 7 ist der Träger 24 mittels der Federeinrichtung 50, die an dem Lagerzapfen 40 und dem Träger 24 abgestützt ist, nach unten beaufschlagt, so dass der Anschlag 65 mit der unteren Stirnseite an der Umfangsfläche 66 der Lagerplatte 41 aufliegt und das Rastelement 32 in der Rastausnehmungen 34a angeordnet ist. In der Verriegelungsstellung der Einrasteinrichtung 31 wird somit die Anlehnhilfe 20 formschlüssig in der entsprechenden Stellung gehalten.

Um die Anlehnhilfe 20 zu verstellen, wird von der Bedienperson an dem Schwenkträger 22 gezogen und dieser angehoben, wobei von der Bedienperson an dem Schwenkträger 22 eine der Federkraft der als Druckfeder ausgebildeten Federeinrichtung 50 entgegenwirkende und entgegengerichtete Betätigungskraft aufgebracht wird, so dass der an dem Lagerzapfen 40 angeordnete Träger 24 entgegen der Kraft der Federeinrichtung 50 mittels der langlochartigen Ausnehmung 45 nach oben bewegt werden kann - wie in der Figur 7 durch den Pfeil P verdeutlicht ist -, so dass die Einrasteinrichtung 31 in die in der Figur 8 dargestellte Lösestellung betätigt wird. In der Lösestellung der Einrasteinrichtung 31 befindet sich das Rastelement 32 außerhalb der Rastausnehmungen 34a.

Anschließend kann der Schwenkträger 22 um die Schwenkachse S verschwenkt werden, beispielsweise in die untere Endstellung, wie in der Figur 9 dargestellt ist.

Ist die gewünschte Stellung des Schwenkträgers 22 erreicht, wird von der Bedienperson der Schwenkträger 22 losgelassen, so dass die Federeinrichtung 50 den an dem Lagerzapfen 40 angeordnete Träger 24 mittels der langlochartigen Ausnehmung 45 nach unten bewegt und die Einrasteinrichtung 31 in die Verriegelungsstellung betätigt. Gemäß der Figur 10 wird beim Loslassen des Schwenkträgers 22 von der Federeinrichtung 50 das Rastelement 32 in die Rastausnehmungen 34d gedrückt, so dass die Anlehnhilfe 20 in der neu eingestellten Stellung formschlüssig gesichert ist.

Wie in Zusammenschau der Figuren 2 bis 10 ersichtlich wird, ist hierdurch der Schwenkträger 22 der erfindungsgemäßen Anlehnhilfe 20 mit der Schwenkachse S derart an dem Fahrerarbeitsplatz F angeordnet, dass sich durch Verschwenken des Schwenkträgers 22 um die Schwenkachse S die Höhe des Anlehnpolsters 21 der Anlehnhilfe 20 zu der Fahrerstandplattform 10 und gleichzeitig der Abstand des Anlehnpolsters 21 zu der Bedieneinrichtung 15 verändert - im dargestellten Ausführungsbeispiel der Abstand zwischen dem Anlehnpolsters 21 und der Bedieneinrichtung 15 in Fahrzeuglängsrichtung L des Flurförderzeugs 1.

Bei der erfindungsgemäßen Anlehnhilfe 20 ist der Mittelabschnitt 25 in horizontaler Richtung angeordnet und die beiden seitlichen Träger 24 erstrecken sich von dem Mittelabschnitt 25 nach vertikal unten. Die Schwenkachse S ist an den seitlichen Trägern 24 an dem dem Mittelabschnitt 25 gegenüberliegenden Endbereich angeordnet.

Durch Verschwenken des Schwenkträgers 22 um die Schwenkachse S nach unten verringert sich somit gleichzeitig die Höhe des Anlehnpolsters 21 zu der Fahrerstandplattform 10 und der Abstand des Anlehnpolsters 21 zu der Bedieneinrichtung 15, im dargestellten Ausführungsbeispiel der Abstand zwischen dem Anlehnpolster 21 und der Bedieneinrichtung 15 in Fahrzeuglängsrichtung L des Flurförderzeugs 1. Für eine kleine Bedienpersonen ergibt sich somit eine ergonomische Anlehnhilfe 20 mit einem niedrigen Anlehnpolster 21 und eine ergonomische Bedienbarkeit und Erreichbarkeit der Bedieneinrichtung 15 der sich an dem Anlehnpolster 21 anlehnenden Bedienperson durch einen kleinen Abstand zwischen dem Anlehnpolster 21 und der Bedieneinrichtung 15.

Entsprechend vergrößert sich durch Verschwenken des Schwenkträgers 22 um die Schwenkachse S nach oben gleichzeitig die Höhe des Anlehnpolsters 21 zu der Fahrerstandplattform 10 und der Abstand des Anlehnpolsters 21 zu der Bedieneinrichtung 15, im dargestellten Ausführungsbeispiel der Abstand zwischen dem Anlehnpolster 21 und der Bedieneinrichtung 15 in Fahrzeuglängsrichtung L des Flurförderzeugs 1. Für eine große Bedienpersonen ergibt sich somit eine ergonomische Anlehnhilfe 20 mit einem hohen Anlehnpolster 21 und eine ergonomische Bedienbarkeit und Erreichbarkeit der Bedieneinrichtung 15 der sich an dem Anlehnpolster 21 anlehnenden Bedienperson durch einen großen Abstand zwischen dem Anlehnpolsters 21 und der Bedieneinrichtung 15.

Mit der erfindungsgemäßen Anlehnhilfe 20 ergibt sich somit aufgrund der schwenkbaren bzw. klappbaren Anordnung mit der stufenweisen gleichzeitigen Verstellung des Anlehnpolsters 21 in vertikaler Richtung und des Abstandes des Anlehnpolsters 21 zu der Bedieneinrichtung 15 eine ergonomisch günstige Anlehnposition für Bedienpersonen mit unterschiedlichen Körpergrößen, wobei gleichzeitig eine gute Erreichbarkeit und Bedienbarkeit der Bedienelemente an der Bedieneirichtung 15 erzielt wird.

Um die stufenweise Verstellung der erfindungsgemäßen Anlehnhilfe 20 zwischen den Anschlägen 60, 61 für die Endstellungen betätigen zu können, muss von der Bedienperson lediglich an dem Schwenkträger 22 eine der Kraft der Federeinrichtung 50 entgegengerichtete Betätigungskraft aufgebracht werden, im dargestellten Ausführungsbeispiel der Schwenkträger 22 in der langlochartigen Ausnehmung 25 nach oben gezogen und angehoben werden, um die Einrasteinrichtung 31 in die Lösestellung zu betätigen, so dass die Anlehnhilfe 20 anschließend um die Schwenkachse S verschwenkt und in die gewünschte Stellung verstellt werden kann. In der gewünschten neuen Stellung wird durch einfaches Loslassen des Schwenkträgers 22 erzielt, dass die Federeinrichtung 50 die Einrasteinrichtung 31 wieder in die Verriegelungsstellung betätigt.

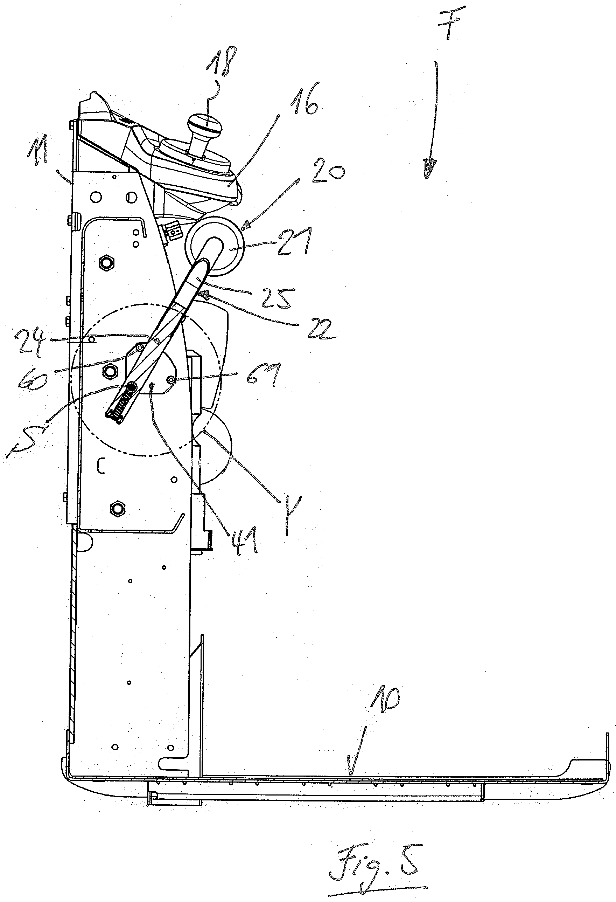

Durch die verschwenkbare Anordnung der erfindungsgemäßen Anlehnhilfe 20 wird weiter auf einfache Weise ermöglicht, dass sich durch entsprechende Wahl der oberen, hochgeklappten und somit der eingeklappten Endstellung die Anlehnhilfe 20 in einer Position befindet, in der der Arbeitsbereich der Bedienperson B innerhalb des Fahrerarbeitsplatzes F nicht verringert wird. Wie in der Figur 5 ersichtlich ist, befindet sich die Anlehnhilfe 20 mit dem Anlehnpolster 21 in der eingeklappten Endstellung in vertikaler Richtung unterhalb der Bedieneinrichtung 16 und innerhalb des Einbauraumes der Bedieneinheit 16 in Fahrzeuglängsrichtung L. In dem in den Figuren 2 bis 10 dargestellten Ausführungsbeispiel, in dem die Schwenkachse S der Anlehnhilfe 20 an der dem Hubgerüst 4 zugewandten Seite des Fahrerarbeitsplatzes F angeordnet ist und somit die Schwenkachse S mastseitig angeordnet ist, wird somit in der eingeklappten, oberen Endstellung der erfindungsgemäßen Anlehnhilfe 20 weder die lastseitige Bedienung, wobei die stehende Bedienperson B die lastseitig angeordnete Bedieneinrichtung 15 bedient, noch die mastseitige Bedienung, wobei die stehende Bedienperson B die mastseitig angeordnete Bedieneinrichtung 16 bedient, des Flurförderzeugs 1 eingeschränkt. Bei der Ausbildung des Flurförderzeugs 1 als Kommissionierflurförderzeug wird in der eingeklappten, oberen Endstellung der erfindungsgemäßen Anlehnhilfe 20 weiter erzielt, dass die Kommissioniertätigkeit der Bedienperson B innerhalb des Fahrerarbeitsplatzes F nicht beeinträchtigt wird.

Die Erfindung ist nicht auf die dargestellte Aufbringung der Betätigungskraft zum Lösen der Einrasteinrichtung 31 durch Ziehen an dem Schwenkträger 22 und somit Anheben des Schwenkträgers 22 beschränkt. Bei entsprechender Anordnung des Rastelements 32 und der Rastausnehmungen 34a, 34b, 34c, 34d ist es ebenfalls möglich, von der Bedienperson durch Drücken auf den Schwenkträger 22 an dem Schwenkträger 22 eine der Federkraft der Federeinrichtung 50 entgegenwirkende und entgegengerichtete Betätigungskraft aufzubringen, die die Einrasteinrichtung 31 in die Lösestellung beaufschlagt.

Die Erfindung ist nicht auf die dargestellte Anordnung der Schwenkachse S der Anlehnhilfe 20 beschränkt. Bei einem Flurförderzeug mit einem Fahrerarbeitsplatz F gemäß der Figur 2, das mit einer mastseitigen Bedieneinrichtung 16 versehen ist, kann die Schwenkachse S der Anlehnhilfe 20 an der dem Lastaufnahmemittel 6 zugewandten Seite des Fahrerarbeitsplatzes F angeordnet sein, um eine Anlehnhilfe 20 bei der Bedienung der Bedieneinrichtung 16 zu ermöglichen. Bei einem Flurförderzeug mit einem Fahrerarbeitsplatz F gemäß der Figur 2, das mit einer mastseitigen Bedieneinrichtung 16 und einer lastseitigen Bedieneinrichtung 15 versehen ist, ist es zudem möglich, zwei erfindungsgemäße Anlehnhilfen 20 vorzusehen, um sowohl eine Anlehnhilfe 20 bei der Bedienung der Bedieneinrichtung 16 als auch eine Anlehnhilfe 20 bei der Bedienung der Bedieneinrichtung 15 zu ermöglichen.

## Patentansprüche

1. Flurförderzeug (1), das als Standgerät zur Bedienung durch eine stehende Bedienperson (B) ausgebildet ist und einen Fahrerarbeitsplatz (F) aufweist, der eine Fahrerstandplattform (10) für die stehende Bedienperson (B) aufweist und der mit mindestens einer Bedieneinrichtung (15; 16), insbesondere einem Bedienpult (BP), versehen ist, wobei der Fahrerarbeitsplatz (F) mit einer Anlehnhilfe (20) für die stehende Bedienperson (B) versehen ist, wobei die Anlehnhilfe (20) an einem Schwenkträger (22) angeordnet ist, der um eine im Wesentlichen parallel zur Fahrerstandplattform (10) angeordnete Schwenkachse (S) verschwenkbar an dem Fahrerarbeitsplatz (F) angeordnet ist, wobei der Schwenkträger (22) derart an dem Fahrerarbeitsplatz (F) angeordnet ist, dass sich durch Verschwenken des Schwenkträgers (22) um die Schwenkachse (S) die Höhe der Anlehnhilfe (20) zu der Fahrerstandplattform (10) und gleichzeitig der Abstand der Anlehnhilfe (20) zu der Bedieneinrichtung (15; 16) verändert, wobei der Schwenkträger (22) zwischen einer eingeklappten Endstellung und einer ausgeklappten Endstellung verschwenkbar und arretierbar ist und eine Arretiereinrichtung (30) zum Arretieren des Schwenkträgers (22) in den Endstellungen und den Zwischenstellungen zwischen den Endstellungen vorgesehen ist, wobei die Arretiereinrichtung (30) als formschlüssige Einrasteinrichtung (31) ausgebildet ist, die zumindest ein Rastelement (32) aufweist, das mit zumindest einer Rastausnehmung (34a; 34b; 34c; 34d) zusammenwirkt, **dadurch gekennzeichnet, dass** die Einrasteinrichtung (31) zwischen einer Verriegelungsstellung und einer Lösestellung betätigbar ist, wobei die Einrasteinrichtung (31) mittels einer Federeinrichtung (50) in die Verriegelungsstellung betätigt ist und durch eine von der Bedienperson (B) an dem Schwenkträger (22) aufgebrachte Betätigungskraft, die der Federkraft der Federeinrichtung (50) entgegengewirkt, in die Lösestellung betätigbar ist.

2. Flurförderzeug nach Anspruch 1, **dadurch gekennzeichnet, dass** der Schwenkträger (22) derart an dem Fahrerarbeitsplatz (F) angeordnet ist, dass sich durch Verschwenken des Schwenkträgers (22) um die Schwenkachse (S) nach unten die Höhe der Anlehnhilfe (20) zu der Fahrerstandplattform (10) verringert und gleichzeitig der Abstand der Anlehnhilfe (20) zu der Bedieneinrichtung (15; 16) verringert und dass sich durch Verschwenken des Schwenkträgers (22) um die Schwenkachse (S) nach oben die Höhe der Anlehnhilfe (20) zu der Fahrerstandplattform (10) vergrößert und gleichzeitig der Abstand der Anlehnhilfe (20) zu der Bedieneinrichtung (15, 16) vergrößert.

3. Flurförderzeug nach Anspruch 1, **dadurch gekennzeichnet, dass** der Schwenkträger (22) stufenweise zwischen der eingeklappten Endstellung und der ausgeklappten Endstellung arretierbar ist.

4. Flurförderzeug nach einem der Ansprüche 1 bis 3, **dadurch gekennzeichnet, dass** der Schwenkträger (22) als U-förmiger Bügel ausgebildet ist, der seitliche Träger (24) und einen die seitlichen Träger (24) verbindenden Mittelabschnitt (25) aufweist, wobei die seitlichen Träger (24) um die Schwenkachse (S) schwenkbar an dem Fahrerarbeitsplatz (F) angeordnet sind und an dem Mittelabschnitt (25) ein Anlehnpolster (21) als Anlehnhilfe (20) angeordnet ist.

5. Flurförderzeug nach Anspruch 4, **dadurch gekennzeichnet, dass** das Anlehnpolster (21) als zylindrisches Polsterelement ausgebildet ist, das konzentrisch an dem Mittelabschnitt (25) angeordnet ist.

6. Flurförderzeug nach einem der Ansprüche 1 bis 5, **dadurch gekennzeichnet, dass** die Schwenkachse (S) von mindestens einem an einer Lagerplatte (41) angeordneten Lagerzapfen (40) gebildet ist.

7. Flurförderzeug nach Anspruch 6, **dadurch gekennzeichnet, dass** der Schwenkträger (22) mit einer langlochartigen Ausnehmung (45) zur Aufnahme des Lagerzapfens (40) versehen ist, so dass der Schwenkträger (22) mittels der langlochartigen Ausnehmung (45) relativ zu dem Lagerzapfen (40) verschiebbar ist.

8. Flurförderzeug nach Anspruch 6 oder 7, **dadurch gekennzeichnet, dass** die Federeinrichtung (50) zwischen dem Schwenkträger (22) und dem Lagerzapfen (40) angeordnet ist.

9. Flurförderzeug nach Anspruch 7 oder 8, **dadurch gekennzeichnet, dass** das Rastelement (32) als Rastbolzen (33) ausgebildet ist, wobei die Längsachse des Rastbolzens (33) auf die Schwenkachse (S) ausgerichtet ist.

10. Flurförderzeug nach Anspruch 9, **dadurch gekennzeichnet, dass** die Rastausnehmungen (34a; 34b; 34c; 34d) jeweils von einer Aufnahmebohrung zur Aufnahme des Rastbolzens (33) ausgebildet sind, wobei die Aufnahmebohrungen mit der Längsachse jeweils auf die Schwenkachse (S) ausgerichtet sind.

11. Flurförderzeug nach einem der Ansprüche 1 bis 10, **dadurch gekennzeichnet, dass** das Rastelement (32) an dem Schwenkträger (22), insbesondere an dem seitlichen Träger (24), und die Rastausnehmung (34a; 34b; 34c; 34d) an dem Flurförderzeug (1), insbesondere an der Lagerplatte (41), angeordnet ist.

12. Flurförderzeug nach einem der Ansprüche 1 bis 10, **dadurch gekennzeichnet, dass** das Rastelement (32) an dem Flurförderzeug (1), insbesondere an der Lagerplatte (41), und die Rastausnehmung (34a; 34b; 34c; 34d) an dem Schwenkträger (22), insbesondere an dem seitlichen Träger (24), angeordnet ist.

13. Flurförderzeug nach einem der Ansprüche 7 bis 12, **dadurch gekennzeichnet, dass** die langlochartige Ausnehmung (45) in dem seitlichen Träger (24) ausgebildet ist, wobei der seitliche Träger (24) mit einem Aufnahmeraum (51) versehen ist, in dem die Federeinrichtung (50) angeordnet ist.

14. Flurförderzeug nach Anspruch 13, **dadurch gekennzeichnet, dass** der Aufnahmeraum (51) von einer Aufnahmebohrung (52) in dem seitlichen Träger (24) gebildet ist, wobei sich die Aufnahmebohrung (52) zu der langlochartigen Ausnehmung (45) erstreckt und fluchtend zu der langlochartigen Ausnehmung (45) angeordnet ist.

15. Flurförderzeug nach einem der Ansprüche 6 bis 14, **dadurch gekennzeichnet, dass** an der Lagerplatte (41) ein mit dem seitlichen Träger (24) zusammenwirkender Anschlag (60) für die eingeklappte Endstellung des Schwenkträgers (22) und ein mit dem seitlichen Träger (24) zusammenwirkender Anschlag (61) für die ausgeklappte Endstellung des Schwenkträgers (24) angeordnet ist.

16. Flurförderzeug nach einem der Ansprüche 6 bis 15, **dadurch gekennzeichnet, dass** an dem seitlichen Träger (24) ein mit der Lagerplatte (41) zusammenwirkender Anschlag (65) für die Verriegelungsstellung der Einrasteinrichtung (31) angeordnet ist.

## Claims

1. Industrial truck (1) which is designed as a standing apparatus for operation by a standing operator (B) and has a driver's workstation (F) which has a driver's stand platform (10) for the standing operator (B) and which is provided with at least one operating device (15; 16), in particular with an operating console (BP), wherein the driver's workstation (F) is provided with a backrest (20) for the standing operator (B), wherein the backrest (20) is arranged on a pivoting support (22) which is arranged on the driver's workstation (F) so as to be pivotable about a pivot axis (S) arranged substantially parallel to the driver's stand platform (10), wherein the pivoting support (22) is arranged on the driver's workstation (F) in such a manner that, by pivoting the pivoting support (22) about the pivot axis (S), the height of the backrest (20) with respect to the driver's stand platform (10) and at the same time the distance of the backrest (20) with respect to the operating device (15; 16) change, wherein the pivoting support (22) is pivotable between a folded-in end position and an unfolded end position and is lockable, and a locking device (30) for locking the pivoting support (22) in the end positions and the intermediate positions between the end positions is provided, wherein the locking device (30) is designed as an interlocking latching device (31) which has at least one latching element (32) which interacts with at least one latching recess (34a; 34b; 34c; 34d), **characterized in that** the latching device (31) is actuable between a locking position and a release position, wherein the latching device (31) is actuated into the locking position by means of a spring device (50) and is actuable into the release position by an actuating force which is applied to the pivoting support (22) by the operator (B) and acts counter to the spring force of the spring device (50).

2. Industrial truck according to Claim 1, **characterized in that** the pivoting support (22) is arranged on the driver's workstation (F) in such a manner that, by pivoting of the pivoting support (22) downwards about the pivot axis (S), the height of the backrest (20) with respect to the driver's stand platform (10) is reduced and at the same time the distance of the backrest (20) with respect to the operating device (15; 16) is reduced, and **in that**, by pivoting of the pivoting support (22) upwards about the pivot axis (S), the height of the backrest (20) with respect to the driver's stand platform (10) is increased and at the same time the distance of the backrest (20) with respect to the operating device (15, 16) is increased.

3. Industrial truck according to Claim 1, **characterized in that** the pivoting support (22) is lockable in a stepwise manner between the folded-in end position and the unfolded end position.

4. Industrial truck according to one of Claims 1 to 3, **characterized in that** the pivoting support (22) is designed as a U-shaped bow which has lateral supports (24) and a central portion (25) connecting the lateral supports (24), wherein the lateral supports (24) are arranged on the driver's workstation (F) so as to be pivotable about the pivot axis (S), and a backrest pad (21) as the backrest (20) is arranged on the central portion (25).

5. Industrial truck according to Claim 4, **characterized in that** the backrest pad (21) is designed as a cylindrical pad element which is arranged concentrically on the central portion (25).

6. Industrial truck according to one of Claims 1 to 5, **characterized in that** the pivot axis (S) is formed by at least one journal (40) arranged on a bearing plate (41).

7. Industrial truck according to Claim 6, **characterized in that** the pivoting support (22) is provided with a slot-like recess (45) for receiving the journal (40), and therefore the pivoting support (22) is displaceable relative to the journal (40) by means of the slot-like recess (45).

8. Industrial truck according to Claim 6 or 7, **characterized in that** the spring device (50) is arranged between the pivoting support (22) and the journal (40).

9. Industrial truck according to Claim 7 or 8, **characterized in that** the latching element (32) is designed as a latching bolt (33), wherein the longitudinal axis of the latching bolt (33) is aligned with the pivot axis (S).

10. Industrial truck according to Claim 9, **characterized in that** the latching recesses (34a; 34b; 34c; 34d) are each formed by a receiving bore for receiving the latching bolt (33), wherein the receiving bores are each aligned by the longitudinal axis with the pivot axis (S).

11. Industrial truck according to one of Claims 1 to 10, **characterized in that** the latching element (32) is arranged on the pivoting support (22), in particular on the lateral support (24), and the latching recess (34a; 34b; 34c; 34d) is arranged on the Industrial truck (1), in particular on the bearing plate (41).

12. Industrial truck according to one of Claims 1 to 11, **characterized in that** the latching element (32) is arranged on the Industrial truck (1), in particular on the bearing plate (41), and the latching recess (34a; 34b; 34c; 34d) is arranged on the pivoting support (22), in particular on the lateral support (24).

13. Industrial truck according to one of Claims 7 to 12, **characterized in that** the slot-like recess (45) is formed in the lateral support (24), wherein the lateral support (24) is provided with a receiving space (51) in which the spring device (50) is arranged.

14. Industrial truck according to Claim 13, **characterized in that** the receiving space (51) is formed by a receiving bore (52) in the lateral support (24), wherein the receiving bore (52) extends with respect to the slot-like recess (45) and is arranged in alignment with the slot-like recess (45).

15. Industrial truck according to one of Claims 6 to 14, **characterized in that** a stop (60) which interacts with the lateral support (24) and is intended for the folded-in end position of the pivoting support (22), and a stop (61) which interacts with the lateral support (24) and is intended for the unfolded end position of the pivoting support (24) are arranged on the bearing plate (41).

16. Industrial truck according to one of Claims 6 to 15, **characterized in that** a stop (65) which interacts with the bearing plate (41) and is intended for the locking position of the latching device (31) is arranged on the lateral support (24).

## Revendications

1. Chariot de manutention (1) qui est réalisé sous forme d'appareil indépendant destiné à être commandé par un opérateur debout (B) et présente un poste de travail de conducteur (F) qui présente une plate-forme de station debout (10) pour l'opérateur debout (B) et qui est pourvu d'au moins un dispositif de commande (15 ; 16), en particulier un pupitre de commande (BP), le poste de travail de conducteur (F) étant pourvu d'un auxiliaire d'appui (20) pour l'opérateur debout (B), l'auxiliaire d'appui (20) étant disposé au niveau d'un support pivotant (22) qui est disposé sur le poste de travail de conducteur (F) de manière à pouvoir pivoter autour d'un axe de pivotement (S) essentiellement parallèle à la plate-forme de station debout (10), le support pivotant (22) étant disposé sur le poste de travail de conducteur (F) de telle sorte que par pivotement du support pivotant (22) autour de l'axe de pivotement (S), la hauteur de l'auxiliaire d'appui (20) par rapport à la plate-forme de station debout (10) et simultanément la distance de l'auxiliaire d'appui (20) par rapport au dispositif de commande (15 ; 16) varie, le support pivotant (22) pouvant pivoter et être bloqué entre une position d'extrémité rentrée par rabattement et une position d'extrémité sortie par rabattement, et un dispositif de blocage (30) pour bloquer le support pivotant (22) dans les positions d'extrémité et dans les positions intermédiaires entre les positions d'extrémité étant prévu, le dispositif de blocage (30) étant réalisé sous forme de dispositif d'encliquetage par engagement par correspondance de formes (31) qui présente au moins un élément d'encliquetage (32) qui coopère avec au moins un évidement d'encliquetage (34a ; 34b ; 34c ; 34d), **caractérisé en ce que** le dispositif d'encliquetage (31) peut être actionné entre une position de verrouillage et une position de libération, le dispositif d'encliquetage (31) étant actionné dans la position de verrouillage au moyen d'un dispositif de ressort (50) et pouvant être actionné dans la position de libération par une force d'actionnement appliquée par l'opérateur (B) sur le support pivotant (22), laquelle s'oppose à la force de ressort du dispositif de ressort (50).

2. Chariot de manutention selon la revendication 1, **caractérisé en ce que** le support pivotant (22) est disposé au niveau du poste de travail de conducteur (F) de telle sorte que par pivotement vers le bas du support pivotant (22) autour de l'axe de pivotement (S), la hauteur de l'auxiliaire d'appui (20) par rapport à la plate-forme de station debout (10) soit réduite et simultanément que la distance de l'auxiliaire d'appui (20) au dispositif de commande (15 ; 16) soit réduite et que par pivotement vers le haut du support pivotant (22) autour de l'axe de pivotement (S), la hauteur de l'auxiliaire d'appui (20) par rapport à la plate-forme de station debout (10) augmente et que simultanément la distance de l'auxiliaire d'appui (20) au dispositif de commande (15, 16) augmente.

3. Chariot de manutention selon la revendication 1, **caractérisé en ce que** le support pivotant (22) peut être bloqué par incréments entre la position d'extrémité rentrée par rabattement et la position d'extrémité sortie par rabattement.

4. Chariot de manutention selon l'une quelconque des revendications 1 à 3, **caractérisé en ce que** le support pivotant (22) est réalisé sous forme d'étrier en forme de U, qui présente des supports latéraux (24) et une portion centrale (25) reliant les supports latéraux (24), les supports latéraux (24) étant disposés de manière à pouvoir pivoter autour de l'axe de pivotement (S) sur le poste de travail de conducteur (F) et un rembourrage d'appui (21) étant disposé en tant qu'auxiliaire d'appui (20) au niveau de la portion centrale (25).

5. Chariot de manutention selon la revendication 4, **caractérisé en ce que** le rembourrage d'appui (21) est réalisé sous forme d'élément de rembourrage cylindrique, qui est disposé concentriquement sur la portion centrale (25).

6. Chariot de manutention selon l'une quelconque des revendications 1 à 5, **caractérisé en ce que** l'axe de pivotement (S) est formé par au moins un tourillon de palier (40) disposé au niveau d'une plaque de palier (41).

7. Chariot de manutention selon la revendication 6, **caractérisé en ce que** le support pivotant (22) est pourvu d'un évidement de type trou oblong (45) pour recevoir le tourillon de palier (40), de telle sorte que le support pivotant (22) puisse être déplacé par rapport au tourillon de palier (40) au moyen de l'évidement de type trou oblong (45).

8. Chariot de manutention selon la revendication 6 ou 7, **caractérisé en ce que** le dispositif de ressort (50) est disposé entre le support pivotant (22) et le tourillon de palier (40).

9. Chariot de manutention selon la revendication 7 ou 8, **caractérisé en ce que** l'élément d'encliquetage (32) est réalisé sous forme de boulon d'encliquetage (33), l'axe longitudinal du boulon d'encliquetage (33) étant orienté vers l'axe de pivotement (S).

10. Chariot de manutention selon la revendication 9, **caractérisé en ce que** les évidements d'encliquetage (34a ; 34b ; 34c ; 34d) sont à chaque fois réalisés par un alésage de réception pour recevoir le boulon d'encliquetage (33), les alésages de réception avec l'axe longitudinal étant à chaque fois orientés vers l'axe de pivotement (S).

11. Chariot de manutention selon l'une quelconque des revendications 1 à 10, **caractérisé en ce que** l'élément d'encliquetage (32) est disposé sur le support pivotant (22), en particulier sur le support latéral (24), et l'évidement d'encliquetage (34a ; 34b ; 34c ; 34d) est disposé sur le chariot de manutention (1), en particulier sur la plaque de palier (41).

12. Chariot de manutention selon l'une quelconque des revendications 1 à 10, **caractérisé en ce que** l'élément d'encliquetage (32) est disposé sur le chariot de manutention (1), en particulier sur la plaque de palier (41), et l'évidement d'encliquetage (34a ; 34b ; 34c ; 34d) est disposé sur le support pivotant (22), en particulier sur le support latéral (24).

13. Chariot de manutention selon l'une quelconque des revendications 7 à 12, **caractérisé en ce que** l'évidement de type trou oblong (45) est réalisé dans le support latéral (24), le support latéral (24) étant pourvu d'un espace de réception (51) dans lequel est disposé le dispositif de ressort (50).

14. Chariot de manutention selon la revendication 13, **caractérisé en ce que** l'espace de réception (51) est formé par un alésage de réception (52) dans le support latéral (24), l'alésage de réception (52) s'étendant vers l'évidement de type trou oblong (45) et étant disposé en affleurement avec l'évidement de type trou oblong (45).

15. Chariot de manutention selon l'une quelconque des revendications 6 à 14, **caractérisé en ce que** sur la plaque de palier (41) sont disposées une butée (60) coopérant avec le support latéral (24) pour la position d'extrémité rentrée par rabattement du support pivotant (22) et une butée (61) coopérant avec le support latéral (24) pour la position d'extrémité sortie par rabattement du support pivotant (24).

16. Chariot de manutention selon l'une quelconque des revendications 6 à 15, **caractérisé en ce qu'**une butée (65) pour la position de verrouillage du dispositif d'encliquetage (31), coopérant avec la plaque de palier (41), est disposée sur le support latéral (24).
